# EUROPÄISCHE PATENTSCHRIFT

(11) **EP 2 806 490 B1**
(45) Veröffentlichungstag und Bekanntmachung des Hinweises auf die Patenterteilung: **14.09.2016**
(21) Anmeldenummer: 13150929.1
(22) Anmeldetag: 11.01.2013
(51) Int. Cl.: H01M 8/04, H01M 8/12

(54) **Temperaturregelung für Brennstoffzellen**
Temperature control for fuel cells
Régulation de température pour cellules combustibles

(30) Priorität: 01.02.2012 DE 102012001857
(43) Veröffentlichungstag der Anmeldung: 26.11.2014
(73) Patentinhaber: Vaillant GmbH, 42859 Remscheid (DE)
(72) Erfinder: Reinert, Andreas, 58455 Witten (DE)
(74) Vertreter: Hocker, Thomas

(56) Entgegenhaltungen:
- WO-A2-2008/028441
- US-A- 3 595 699
- US-A1- 2002 006 537
- US-A1- 2011 311 889

## Beschreibung

Die Erfindung betrifft ein Verfahren zur Regelung der Temperatur des Stacks einer Brennstoffzelle, bevorzugt einer SOFC-Brennstoffzelle.

Zur gattungsgemäßen Stacktemperaturregelung wird eine Temperatur auf der Austrittsseite oder im Stackkern als Regelgröße herangezogen.

Die Verwendung der Temperatur an der Austrittsseite bringt das Problem mit sich, dass die dort gemessene Temperatur die Temperatur im Inneren des Stacks nur mit einer Zeitverzögerung wiedergibt. Es sind zwar Regler für Totzeit behaftete Systeme bekannt, jedoch kann es bei der Regelung der Stacktemperatur dennoch zu Instabilitäten kommen, da die Totzeit des Systems von weiteren Parametern abhängig ist.

Die direkte Messung der Temperatur im Stack bringt das Problem mit sich, dass bei SOFC-Stacks der Zugang zum Stackkern nur über die Gasräume oder gegebenenfalls über Sondereinbauten möglich ist. Wählt man den Zugang über die Gasräume, hat man nur wenig Bauraum zur Verfügung, so dass man nur sehr dünne Thermoelemente mit sehr begrenzter Lebensdauer verwenden kann. Weiterhin können selbst sehr dünne Thermoelemente die Strömungsverhältnisse im Stack beeinflussen. Die Verwendung von Sondereinbauten wie z.B. Zwischenplatten sind ebenfalls schwer realisierbar und beeinflussen den Stack durch eine veränderte Wärmeleitfähigkeit, zusätzliche Grenzfläche usw.

In der Patenanmeldung WO 2008/028441 A2 wird ein Brennstoffzellensystem sowie ein Verfahren zum Beeinflussen des Wärme-und Temperaturhaushalts eines Brennstoffzellenstapels in einem Brennstoffzellensystem beschrieben. Dazu wird mit Temperatursensoren die Temperatur der Katodenzuluft und der Kathodenabluft vor und hinter dem Stack gemessen. Dabei werden 2 Regelkreise eingesetzt. Der erste Regelkreis beruht auf der vom Temperatursensor für die Kathodenzuluft gemessenen Temperatur und verwendet als Stellgröße die Einstellung eines Volumenstromteilers. Der zweite Regelkreis beruht auf der vom Temperatursensor für die Kathodenabluft gemessenen Temperatur und verwendet als Stellgröße die Drehzahl des Kathodenabluft Gebläses. Alternativ wird vorgeschlagen, die Drehzahl des Kathodenabluft Gebläses in Abhängigkeit der Temperaturdifferenzen zwischen Katode zu Luft und Kathodenabluft zu regeln. Da die Temperaturmessung außerhalb des Stacks erfolgt, repräsentieren die Messwerte nicht die Stacktemperatur.

Das Patent US 3,595,699 offenbart ein Regelungssystems für Brennstoffzellen, bei dem die Verlustwärme anhand der Brennstoffzellenbelastung vorher gesehen wird, so dass die Kühlung ohne zeitliche Verzögerung erfolgen kann.

Die Patentanmeldung US 2002/0006537 A1 beschreibt die Gaszufuhr an einem Brennstoffzellensystem.

Die Patentanmeldung US 2011/0311889 A1 offenbart ein Brennstoffzellensystem mit einer Kühlung, bei dem die Eintrocknung der Polymermembran überwacht wird.

Es ist daher Aufgabe der Erfindung, ein Verfahren zur Regelung der Temperatur im Inneren des Stacks sowie eine Vorrichtung zum Durchführen des Verfahrens bereitzustellen, das die vorgenannten Nachteile vermeidet.

Diese Aufgabe wird gemäß den Merkmalen des Anspruchs 1 und des unabhängigen Vorrichtungsanspruchs 6 gelöst. Unteransprüche beschreiben vorteilhafte Varianten und Ausführungen.

Erfindungsgemäß wird die Aufgabe dadurch gelöst, dass die direkte Messung der Temperatur im Inneren des Stacks ersetzt wird durch eine Erfassung des elektrischen Stroms sowie eine Abschätzung, wie sich die Temperatur im Inneren des Stacks aufgrund der Verlustleistung in Bezug auf die Temperatur des Stacks am Lufteingang und/oder Luftausgang verhält. Dies erfolgt auf der Basis eines Prozessmodells. Dadurch ist es möglich, die Temperatur im Inneren des Stacks indirekt über die Regelung eines Temperaturkennwerts, der aus gewichteteten Temperaturen des Stacks am Lufteingang und/oder Luftausgang berechnet wird, zu regeln. Das Prozessmodell kann beispielsweise in Form einer Parametergleichung oder einer Tabelle vorliegen und stellt den Sollwert des Temperaturkennwerts in Abhängigkeit vom Strom dar. Ein solcher Zusammenhang ist grundsätzlich bekannt aus der Patentschrift US 3,595,699 und kann im Vorfeld durch Messungen oder Simulationen bestimmt werden. Wesentliche Einflussfaktoren sind dabei die Wärmeleitfähigkeit des Stacks sowie die Aufteilung zwischen konvektiver und Strahlungskühlung usw. Damit ergibt sich, dass der Temperaturkennwert, insbesondere die Temperatur am Lufteingang des Stacks umso niedriger sein muss, je höher die Strombelastung (Lastpunkt) und davon abhängig auch die Verlustleistung ist. Somit wird unter Verwendung des Prozessmodells zur jeweiligen Strombelastung die Temperatur ermittelt, die am Luftein- und -ausgang des Stacks herrschen muss, damit die Temperatur im Inneren des Stacks dem gewünschten Wert entspricht. Durch Änderung der Wärmemenge, die durch die Temperatur der zugeführten Luft und/oder des Luftvolumenstroms bestimmt wird, wird dann die Temperatur des Stacks entsprechend eingestellt. Dabei wird im Prozessmodell ebenfalls berücksichtigt, dass ein höherer Luftvolumenstrom auch eine größere Wärmemenge aus dem Stack abführt.

Bei einer Variante der Erfindung wird die Wärmemenge über die Temperatur der Luft beeinflusst. Bevorzugt erfolgt dies durch Mischen zweier Luftströme mit unterschiedlicher Temperatur, beispielsweise Frischluft und durch Abwärme der Brennstoffzelle vorgewärmt Luft.

Alternativ oder zusätzlich erfolgt dies durch den Massenstrom der zugeführten Luft.

Der Temperaturkennwert wird in einer Verfahrensvariante aus der mit einem ersten Faktor gewichteten Temperatur des Stacks am Lufteingang und der mit einem zweiten Faktor gewichteten Temperatur des Stacks am Luftausgang berechnet. Wenn der erste und der zweite Faktor gleich sind erfolgt eine Mittelwertbildung. Wenn der erste Faktor größer als der zweite Faktor ist, wird die Temperatur des Stacks am Lufteingang stärker berücksichtigt. Der grundsätzliche Vorteil der Berücksichtigung der Temperatur des Stacks am Luftausgang ist, dass dadurch dynamische Vorgänge besser abgebildet werden können, dass sich vorteilhaft bei Lastwechseln auswirkt.

In einer alternativen Verfahrensvariante wird die Temperatur des Stacks am Luftausgang nicht berücksichtigt, dies bedeutet, dass der Temperaturkennwert nur aus der Temperatur des Stacks am Lufteingang gebildet wird.

In einer Variante des Verfahrens wird der gelieferte Strom der Brennstoffzelle erst dann dem angeforderten Strom angepasst, wenn die Temperatur am Lufteingang des Stacks erreicht ist.

In einer alternativen Variante des Verfahrens wird der Strom unmittelbar dem jeweiligen Strombedarf angepasst. Die Regelung der Temperatur erfolgt parallel. Dies ist insbesondere dann vorteilhaft, wenn der Strom in Rampen geändert wird. Bei einer Überschreitung einer bestimmten Temperaturdifferenz kann jedoch eine weitere Stromänderung ausgesetzt werden.

In einer Weiterbildung des erfindungsgemäßen Verfahrens wird die Dynamik der Temperaturänderung berücksichtigt. Da der Stack eine Masse und eine Wärmekapazität aufweist, wird sich bei einer Erhöhung des Stroms die Temperatur allmählich erhöhen. Dieser Tatsache wird in dem dynamischen Prozessmodell bei der Weiterbildung des Verfahrens Rechnung getragen.

In einer besonders bevorzugten Weiterbildung des erfindungsgemäßen Verfahrens wird zusätzlich am Luftausgang des Stacks die Temperatur gemessen und mit der erwarteten Temperatur anhand des Prozessmodells verglichen. Wird dabei festgestellt, dass die Temperatur am Luftausgang des Stacks abweicht, was auf einen Fehler des Prozessmodells hinweist, wird das Prozessmodell korrigiert. Dies kann zum Beispiel bei einer Degradation des Stacks der Fall sein, bei der sich die physikalischen Eigenschaften des Stacks ändern und damit nicht mehr zu dem Prozessmodell passen.

Ebenfalls besonders bevorzugt eine Weiterbildung des erfindungsgemäßen Verfahrens, bei der der erste und der zweite Faktor, mit denen die Temperatur des Stacks am Lufteingang und am Luftausgang gewichtet werden, und das Prozessmodell so aufeinander abgestimmt sind, dass die im Stack gespeicherte Wärmemenge unabhängig vom Strom und damit unabhängig vom Lastzustand konstant ist. Das ist der Fall, wenn beide Faktoren gleich groß sind. Wenn sie den Wert 0,5 annehmen, wird eine Durchschnittstemperatur gebildet. Damit ist gewährleistet, dass auch die Temperatur im Inneren des Stacks konstant ist. Wenn der erste Faktor größer gewählt wird, führt dies zu einer stärkeren Gewichtung der Temperatur am Lufteingang des Stacks. Diese Weiterbildung ist vorteilhaft bei transienten Betriebszuständen.

Eine erfindungsgemäße Brennstoffzelle, an der das Verfahren durchgeführt wird, weist einen Stack, einen Temperatursensor, ein Gebläse zum Zuführen von Luft sowie einen Regler auf. Der Regler führt die oben beschriebenen Verfahrensschritte aus.

In einer Weiterbildung der erfindungsgemäßen Brennstoffzelle ist ein Temperatursensor am Luftausgang des Stacks vorgesehen, mit dessen Hilfe im Regler das Prozessmodell korrigiert werden kann sowie die Temperatur gewichtet mit der Temperatur des Stacks am Lufteingang zu einem Temperaturkennwert berechnet werden kann.

Die Erfindung wird nun anhand der Figuren detailliert erläutert.

Es stellen dar:
- Figur 1:: den Stack einer erfindungsgemäßen Brennstoffzelle,
- Figur 2:: den Verlauf des Sollwerts des Temperaturkennwerts in Abhängigkeit vom Strom,
- Figur 3:: das Schaltbild eines Details einer erfindungsgemäßen Brennstoffzelle.

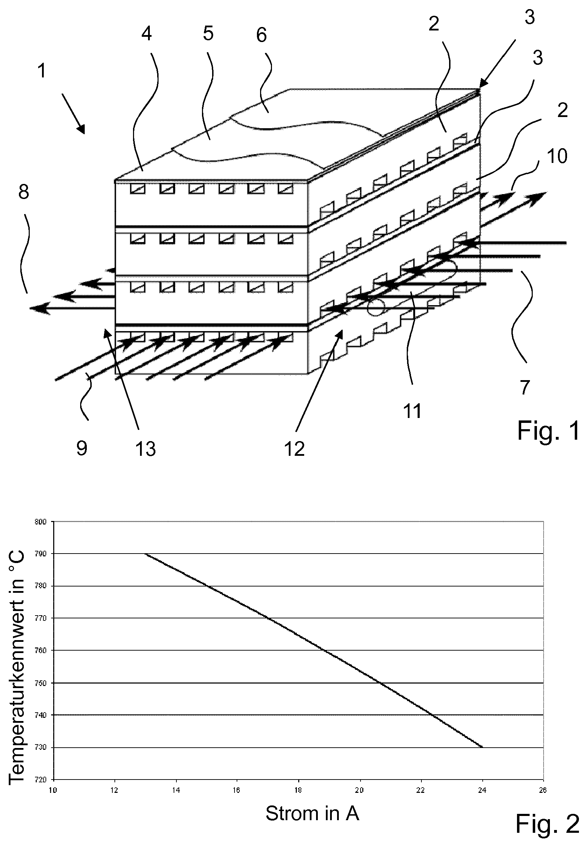

Figur 1 zeigt den Stack einer erfindungsgemäßen Brennstoffzelle. Der Stack besteht aus mehreren übereinander gestapelten Platten 2, die durch eine Zwischenlage 3 voneinander getrennt sind. In den Platten sind jeweils oberhalb und unterhalb der Zwischenlagen 3 Führungen für Luft und Brenngas eingearbeitet. Die Zwischenlage 3 besteht aus einer Anode 4, die dem Brenngas zugewendet ist, einem Elektrolyt 5 und einer Kathode 6, die der Luft zugewendet ist. Aufgrund dieses Aufbaus findet ein Ionenaustausch statt, wodurch elektrische Energie erzeugt wird. In dem hier dargestellten Beispiel strömt die Luft von der Luftzufuhr 7 zur Luftabfuhr 8 und das Brenngas über Kreuz von der Brenngaszufuhr 9 zur Brenngasabfuhr 10. Es sind auch andere Anordnungen der Strömungsrichtungen bekannt.

Im Betrieb der Brennstoffzelle entsteht aufgrund von Verlustleistung bei der Stromerzeugung Wärme im Stack 1. Da es wie eingangs erläutert sehr schwierig ist, die Temperatur innerhalb des Stacks zu messen bzw. die Regelgüte einer Temperaturregelung bei Messung der Temperatur am Luftausgang 13 des Stacks 1 nicht ausreichend ist, wird anhand eines Prozessmodells und des bekannten Stroms, der durch die Brennstoffzelle fließt, geschätzt, um wie viel sich die Temperatur zwischen dem Lufteingang des Stacks und dem Inneren des Stacks erhöht. Dazu ist in einem Prozessmodell dieser Zusammenhang hinterlegt.

In Figur 2 ist dargestellt, wie der Sollwert des Temperaturkennwerts, welcher gewichtet aus der Temperatur des Stacks am Lufteingang und -ausgang gebildet wird, in Abhängigkeit vom Strom verläuft, damit eine gewünschte Temperatur im Inneren des Stacks erreicht wird. Je höher die Strombelastung ist, desto niedriger muss der Temperaturkennwert Stacks sein, damit im Inneren des Stacks die gewünschte Temperatur erreicht wird.

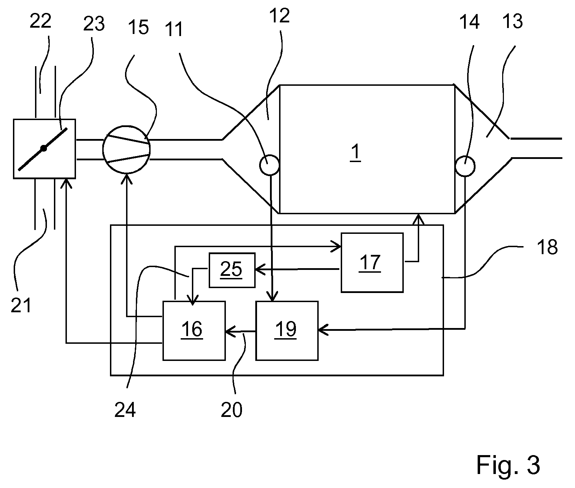

Figur 3 zeigt das Schaltbild eines Details einer erfindungsgemäßen Brennstoffzelle. Von einem Mischer 23 wird über eine Zufuhr für Frischluft 22 und eine Zufuhr für vorgewärmte Luft 21 kalte Frischluft mit vorgewärmter Luft gemischt und über das Gebläse 15 dem Lufteingang 12 des Stacks 1 zugeführt. Ebenfalls möglich ist es, dass der Mischer 23 hinter dem Gebläse 15 angeordnet ist, wobei das Gebläse in beiden oder nur in einem der Zufuhrleitungen 21, 22 vorgesehen ist. In dem Fall, dass in beiden Zufuhrleitungen 21, 22 ein Gebläse 15 vorgesehen ist, kann der Mischer 23 durch eine entsprechende Ansteuerung der beiden Gebläse ersetzt werden.

Die Luft durch strömt den Stack 1, interagiert mit dem Brenngas, dessen Führung hier nicht dargestellt ist, und wird am Luftaufgang 13 abgeführt. Dabei entsteht Strom, der über hier nicht dargestellte Leitungen abgeführt wird. Dieser Strom wird durch einen Stromregler 17 entsprechend eines angeforderten Stroms gesteuert. Am Lufteingang 12 des Stacks 1 ist ein Temperatursensor 11 vorgesehen. Am Luftausgang 13 des Stacks 1 ist ebenfalls ein Temperatursensor 14 vorgesehen. Die Temperatursensoren 11, 14 erfassen dabei die Stacktemperatur am Lufteingang und Luftausgang. Ein Rechenglied 19 gewichtet die beiden gemessenen Temperaturen der Sensoren 11, 14 und stellt einen Temperaturkennwert 20 bereit. Dieser Temperaturkennwert 20 wird einem Regler 16 zugeführt, welche den Temperaturkennwert 20 auf einen vorgegebenen Sollwert 24 regelt. Dieser vorgegebenen Sollwert 24 wird anhand eines Prozessmodells 25 aus dem angeforderten Strom des Stacks, der vom Stromregler 17 zur Verfügung gestellt wird, bestimmt. Das Prozessmodell 25 kann in Form einer Parametergleichung, einer Tabelle oder in Form eines dynamischen Prozessmodells vorliegen und stellt einen Zusammenhang zwischen dem Strom und dem Sollwert des Temperaturkennwerts her. Als Stellgröße gibt der Temperaturregler 16 ein Signal an das Gebläse 15 und/oder den Mischer 23 aus. Anstelle der Ansteuerung des Gebläses 15 könnten beispielsweise auch Luftklappen oder eine Drossel angesteuert werden. Der Temperaturregler 16, der Stromregler 17, das Rechenglied 19 und das Prozessmodell 24 sind in einem Regler 18 zusammengefasst.

Der Stromregler 17 kann in der Weise betrieben werden, dass er entweder den Strom kontinuierlich und parallel zur Regelung der Temperatur durch den Temperaturregler 16 angepasst. Alternativ kann der Stromregler 17 so betrieben werden, dass der angeforderte Strom durch den Stack 1 erst dann geliefert wird, wenn der Temperaturkennwert 20 sich dem Sollwert angenähert hat. Ebenfalls ist es möglich, die vorgenannte kontinuierliche Anpassung des Stroms dahingehend zu erweitern, dass der angeforderte Strom durch den Stack 1 erst dann geliefert wird, wenn die Abweichung des Temperaturkennwerts 20 vom Sollwert innerhalb eines als sicher angesehenen Bereichs ist. Dadurch können Überlastungen vermieden werden.

Darüber hinaus kann vom Regler 18 auch eine kontinuierliche Überwachung des Prozessmodells erfolgen, indem der Messwert des Temperatursensors 14 mit einem erwarteten Messwert verglichen wird. Diese Temperatur korreliert sehr gut mit der Temperatur im Inneren des Stacks 1, kann jedoch aufgrund der zeitlichen Verzögerung nicht direkt für eine stabile Temperaturregelung herangezogen werden. Die vom Temperatursensor 14 gemessene Temperatur wird mit der im Inneren des Stacks erwarteten Temperatur verglichen. Bei langfristigen Abweichungen werden die Parameter des im Temperaturregler 16 hinterlegten Prozessmodells korrigiert.

Das Verfahren der Regelung läuft beispielsweise wie folgt ab. Es wird davon ausgegangen, dass die Brennstoffzelle in einem stationären Zustand befindet. Bei einer Änderung des Angefordertenstroms, die auf den Stromregler 17 einwirkt, wird der angeforderte Strom zunächst an das Prozessmodell 24 übergeben. Dieses ermittelt den dazu passenden Sollwert des Temperaturparameters. Nun erfolgt eine Temperaturregelung des Temperaturparameters 20. Dazu wird die Temperatur mittels der Temperatursensoren 11 und 14 gemessen und vom Rechenglied 19 gewichtet addiert. Die Gewichtung kann beispielsweise so erfolgen, dass der Wert des Temperatursensors 11 mit einem ersten Faktor 0,5 und der Wert des Temperatursensors 14 mit einem zweiten Faktor 0,5 multipliziert wird. Anschließend werden beide Produkte addiert. Es sind auch andere Gewichtungen wie 1,0 für den ersten Faktor und 0 für den zweiten Faktor sowie andere Gewichtungen möglich. Welche Gewichtung vorteilhaft ist, hängt von den dynamischen Eigenschaften des Stacks und der zu erreichenden Regelgüte ab.

Anschließend wird der gebildete Temperaturkennwert 20 mit dem Sollwert verglichen. Bei einer Regelabweichung wird in der Weise auf das Gebläse 15 und/oder den Mischer 23 eingewirkt, dass bei einem zu hohen Temperaturkennwert die Luftmenge erhöht wird und/oder die Temperatur der Luft verringert wird. Sobald der Temperaturkennwert am Lufteingang 12 dem Sollwert erreicht hat, gibt der Temperaturregler den angeforderten Strom an den Stromregler 17 frei, der nun den Strom erhöht.

### Bezugszeichenliste

- 1: Stack
- 2: Platte
- 3: Zwischenlage
- 4: Anode
- 5: Elektrolyt
- 6: Kathode
- 7: Luftzufuhr
- 8: Luftabfuhr
- 9: Brenngaszufuhr
- 10: Brenngasabfuhr
- 11: Temperatursensor
- 12: Lufteingang
- 13: Luftausgang
- 14: Temperatursensor
- 15: Gebläse
- 16: Temperaturregler
- 17: Stromregler
- 18: Regler
- 19: Rechenglied
- 20: Temperaturkennwert
- 21: Zufuhr für vorgewärmte Luft
- 22: Zufuhr für Frischluft
- 23: Mischer
- 24: Sollwert
- 25: Prozessmodell

## Patentansprüche

1. Verfahren zur Regelung der Temperatur im Inneren des Stacks (1) einer Brennstoffzelle, insbesondere einer SOFC-Brennstoffzelle, **gekennzeichnet durch die Schritte**
- Ermitteln des angeforderten Stroms
- Bestimmen eines Sollwerts für einen Temperaturkennwert (20), der gewichtet aus der Temperatur des Stacks_(1) am Lufteingang (12) und der Temperatur des Stacks_(1) am Luftausgang (13) gebildet wird in Abhängigkeit vom angeforderten Strom auf der Basis eines Prozessmodells,
- Regeln des Temperaturkennwerts (20), wobei die Stellgröße die über die Luft zugeführte Wärmemenge ist.
- Einstellen des angeforderten Stroms

2. Verfahren nach Anspruch 1, **dadurch gekennzeichnet, dass** die über die Luft zugeführte Wärmemenge durch die Temperatur der Luft beeinflusst wird.

3. Verfahren nach Anspruch 2, **dadurch gekennzeichnet, dass** die Temperatur der Luft durch Mischen zweier Luftströme mit unterschiedlicher Temperatur beeinflusst wird.

4. Verfahren nach einem der Ansprüche 1 bis 3, **dadurch gekennzeichnet, dass** die über die Luft zugeführte Wärmemenge durch den Massenstrom der Luft beeinflusst wird.

5. Verfahren nach einem der Ansprüche 1 bis 4, **dadurch gekennzeichnet, dass** der Temperaturkennwert (20) aus der mit einem ersten Faktor gewichteten Temperatur des Stacks (1) am Lufteingang (12) und der mit einem zweiten Faktor gewichteten Temperatur des Stacks (1) am Luftausgang (13) gebildet wird und dass der erste Faktor größer als oder gleich ist wie der zweite Faktor.

6. Verfahren nach einem der Ansprüche 1 bis 4, **dadurch gekennzeichnet, dass** die Gewichtung in der Weise erfolgt, dass der Temperaturkennwert (20) nur aus der Temperatur des Stacks(1) am Lufteingang (12) gebildet wird.

7. Verfahren nach einem der Ansprüche 1 bis 6, **dadurch gekennzeichnet, dass** das Einstellen des angeforderten Stroms erst erfolgt, nachdem die Temperatur des Stacks (1) am Lufteingang (12) den Sollwert erreicht hat.

8. Verfahren nach einem der Ansprüche 1 bis 6, **dadurch gekennzeichnet, dass** das Einstellen des angeforderten Stroms parallel zum Regeln der Temperatur des Stacks (1) am Lufteingang (12) erfolgt.

9. Verfahren nach Anspruch 8, **dadurch gekennzeichnet, dass** bei einer Überschreitung der Abweichung des Istwertes des Temperaturkennwerts (20) vom Sollwert um einen vorgebbaren Schwellenwert eine Änderung des Stroms unterbunden wird.

10. Verfahren nach einem der vorhergehenden Ansprüche, **dadurch gekennzeichnet, dass** das Prozessmodell ein dynamisches Prozessmodell ist, welches anhand der Wärmekapazität des Stacks den zeitlichen Verlauf der Temperatur abbildet.

11. Verfahren nach einem der vorhergehenden Ansprüche, **gekennzeichnet durch die zusätzlichen Schritte**
- Messen der Temperatur des Stacks (1) oder der Luft am Luftausgang (13)
- Ermitteln der Abweichung der gemessenen Temperatur des Stacks (1) oder der Luft am Luftausgang (13) von einer aufgrund des Prozessmodells erwarteten Temperatur
- Korrektur des Prozessmodells

12. Verfahren nach einem der vorhergehenden Ansprüche, **dadurch gekennzeichnet, dass**
der erste und der zweite Faktor und das Prozessmodell so aufeinander abgestimmt sind, dass die im Stack gespeicherte Wärmemenge unabhängig vom Strom konstant ist.

13. Brennstoffzelle, insbesondere SOFC-Brennstoffzelle, mit einem Stack (1), mit einem Temperatursensor (11), mit einem Gebläse zum Zuführen von Luft zum Stack (1) und mit einem Regler (18) zum Regeln der Temperatur im Inneren des Stacks, **dadurch gekennzeichnet, dass** der Temperatursensor (11) am Lufteingang (12) des Stacks (1) vorgesehen ist und dass der Regler (18) gemäß dem Verfahren nach einem der Ansprüche 1 bis 12 arbeitet.

14. Brennstoffzelle nach Anspruch 13, **dadurch gekennzeichnet, dass** die Brennstoffzelle zusätzlich einen Temperatursensor (14) am Luftausgang (13) des Stacks (1) umfasst, welcher mit dem Regler (18) verbunden ist.

## Claims

1. Method for controlling the temperature inside a stack (1) of a fuel cell, in particular a SOFC fuel cell, **characterized by the steps of**
- determining a requested current,
- determining a set value for a temperature parameter (20), the temperature parameter being calculated from the weighted temperature of the stack (1) at the air intake (12) and the weighted temperature of the stack (1) at the air outlet (13) in dependence upon the requested current on the basis of a process model,
- controlling the temperature parameter (20) using a manipulated variable, the manipulated variable being the amount of heat supplied through the air,
- feeding of the requested current.

2. Method according to claim **1, characterized in that** the amount of heat supplied through the air is influenced by the air temperature.

3. Method according to claim 2, **characterized in that** the air temperature is influenced by mixing two air flows of different temperature.

4. Method according to any of claims 1 to 3, **characterized in that** the amount of heat supplied through the air is influenced by a mass flow of the air.

5. Method according to any of claims 1 to 4, **characterized in that** the temperature parameter (20) is calculated from the temperature, weighted with a first factor, of the stack (1) at the air intake (12) and the temperature, weighted with a second factor, of the stack (1) at the air outlet (13), and the first factor is greater than or equal to the second factor.

6. Method according to any of claims 1 to 4, **characterized in that** the weighting occurs such that the temperature parameter (20) is solely calculated from the temperature of the stack (1) at the air intake (12).

7. Method according to any of claims 1 to 6, **characterized in that** the feeding of the requested current only occurs when the temperature of the stack (1) at the air intake (12) has reached a set value.

8. Method according to any of claims 1 to 6, **characterized in that** the feeding of the requested current and controlling of the temperature of the stack (1) at the air intake (12) occur in parallel.

9. Method according to claim 8, **characterized in that** a change of current is prevented when a deviation of an actual value of the temperature parameter (20) from a set value exceeds a predetermined threshold.

10. Method according to any of the preceding claims, **characterized in that** the process model is a dynamic process model displaying a temperature curve over time using a heat capacity of the stack.

11. Method according to any of the preceding claims, **characterized by the further steps of**
- measuring the temperature of the stack (1) or of the air at the air outlet (13)
- determining the deviation of the measured temperature of the stack (1) or of the air at the air outlet (13) from an expected temperature based on the process model
- correcting the process model.

12. Method according to any of the preceding claims, **characterized in that** the first and second factors and the process model are set such that, independent of the current, a constant amount of heat is stored in the stack.

13. Fuel cell, in particular a SOFC fuel cell, with a stack (1), comprising a temperature sensor (11), a fan for supplying air to the stack (1) and a control unit (18) for controlling the temperature inside the stack, **characterized in that** the temperature sensor (11) is provided at the air intake (12) of the stack (1) and the control unit (18) functions in accordance with a method according to any of claims 1 to 12.

14. Fuel cell according to claim 13, **characterized in that** the fuel cell further comprises a temperature sensor (14) at the air outlet (13) of the stack (1), the temperature sensor being connected to the control unit (18).

## Revendications

1. Procédé pour réguler la température à l'intérieur de l'empilement (1) d'une pile à combustible, en particulier d'une pile à combustible à oxyde solide (solid oxide fuel cell, SOFC), **caractérisé par les étapes suivantes**
- la détermination du courant requis
- la définition d'une valeur théorique pour une valeur caractéristique de température (20), qui est formée de manière pondérée à partir de la température de l'empilement (1) au niveau de l'entrée d'air (12) et de la température de l'empilement (1) au niveau de la sortie d'air (13), en fonction du courant requis sur la base d'un modèle de processus,
- la régulation de la valeur caractéristique de température (20), dans lequel la grandeur de réglage est la quantité de chaleur amenée par l'intermédiaire de l'air,
- le réglage du courant requis.

2. Procédé selon la revendication 1, **caractérisé en ce que** la quantité de chaleur amenée par l'intermédiaire de l'air est influencée par la température de l'air.

3. Procédé selon la revendication 2, **caractérisé en ce que** la température de l'air est influencée par le mélange de deux flux d'air présentant une température différente.

4. Procédé selon l'une quelconque des revendications 1 à 3, **caractérisé en ce que** la quantité de chaleur amenée par l'intermédiaire de l'air est influencée par le flux massique de l'air.

5. Procédé selon l'une quelconque des revendications 1 à 4, **caractérisé en ce que** la valeur caractéristique de température (20) est formée à partir de la température, pondérée avec un premier facteur, de l'empilement (1) au niveau de l'entrée d'air (12) et de la température, pondérée avec un deuxième facteur, de l'empilement (1) au niveau de la sortie d'air (13), et en **en ce que** le premier facteur est plus grand ou est égal au deuxième facteur.

6. Procédé selon l'une quelconque des revendications 1 à 4, **caractérisé en ce que** la pondération est effectuée de telle manière que la valeur caractéristique de température (20) est formée seulement à partir de la température de l'empilement (1) au niveau de l'entrée d'air (12).

7. Procédé selon l'une quelconque des revendications 1 à 6, **caractérisé en ce que** le réglage du courant requis est effectué seulement après que la température de l'empilement (1) a atteint au niveau de l'entrée d'air (12) la valeur théorique.

8. Procédé selon l'une quelconque des revendications 1 à 6, **caractérisé en ce que** le réglage du courant requis est effectué en parallèle de la régulation de la température de l'empilement (1) au niveau de l'entrée d'air (12).

9. Procédé selon la revendication 8, **caractérisé en ce que** dans le cas d'un dépassement de l'écart de la valeur réelle de la valeur caractéristique de température (20) par la valeur théorique d'une valeur de seuil pouvant être spécifiée, une modification du courant est empêchée.

10. Procédé selon l'une quelconque des revendications précédentes, **caractérisé en ce que** le modèle de processus est un modèle de processus dynamique, qui reproduit, à l'aide de la capacité de chaleur de l'empilement, l'évolution dans le temps de la température.

11. Procédé selon l'une quelconque des revendications précédentes, **caractérisé par les étapes supplémentaires suivantes**
- la mesure de la température de l'empilement (1) ou de l'air au niveau de la sortie d'air (13)
- la détermination de l'écart de la température mesurée de l'empilement (1) ou de l'air au niveau de la sortie d'air (13) par une température attendue du fait du modèle de processus
- la correction du modèle de processus.

12. Procédé selon l'une quelconque des revendications précédentes, **caractérisé en ce que**
le premier et le deuxième facteur et le modèle de processus sont adaptés les uns aux autres de telle sorte que la quantité de chaleur accumulée dans l'empilement est constante indépendamment du courant.

13. Pile à combustible, en particulier pile à combustible SOFC, comprenant un empilement (1), comprenant un capteur de température (11), comprenant une soufflante pour amener de l'air vers l'empilement (1) et comprenant un régulateur (18) pour réguler la température à l'intérieur de l'empilement, **caractérisée en ce que** le capteur de température (11) est prévu au niveau de l'entrée d'air (12) de l'empilement (1), et **en ce que** le régulateur (18) fonctionne selon le procédé selon l'une quelconque des revendications 1 à 12.

14. Pile à combustible selon la revendication 13, **caractérisée en ce que** la pile à combustible comprend en supplément un capteur de température (14) au niveau de la sortie d'air (13) de l'empilement (1), lequel est relié au régulateur (18).
